# EUROPÄISCHE PATENTSCHRIFT

(11) **EP 1 060 381 B1**
(45) Veröffentlichungstag und Bekanntmachung des Hinweises auf die Patenterteilung: **02.05.2003**
(21) Anmeldenummer: 99937809.4
(22) Anmeldetag: 13.01.1999
(51) Int. Cl.: G01N 19/02

(54) **VERFAHREN UND GERÄT ZUR BESTIMMUNG DES OBERFLÄCHEN-REIBUNGSKOEFFIZIENTS EINES KÖRPERS**
METHOD AND DEVICE FOR DETERMINING THE SURFACE FRICTION COEFFICINET IN BODIES
DISPOSITIF ET PROCEDE PERMETTANT DE DETERMINER LE COEFFICIENT DE FROTTEMENT DE LA SURFACE D'UN CORPS

(30) Priorität: 28.01.1998 DE 19803219
(43) Veröffentlichungstag der Anmeldung: 20.12.2000
(73) Patentinhaber: FRAUNHOFER-GESELLSCHAFT ZUR FÖRDERUNG DER ANGEWANDTEN FORSCHUNG E.V., 80636 München (DE)
(72) Erfinder: Biehl, Margit, 66606 St. Wendel (DE)
(74) Vertreter: Gagel, Roland, Dr.
(86) Internationale Anmeldenummer: DE9900041
(87) Internationale Veröffentlichungsnummer: WO99039185

(56) Entgegenhaltungen:
- EP-A- 0 491 234
- DE-A- 19 533 736
- GB-A- 2 205 960
- US-A- 5 403 295
- YOSHIKIMI UYAMA ET AL: "LOW-FRICTIONAL YOSHIKIMI UYAMA ET AL: "LOW-FRICTIONAL CATHETER MATERIALS BY PHOTO-INDUCED GRAFT CATHETER MATERIALS BY PHOTO-INDUCED GRAFT POLYMERIZATION" POLYMERIZATION" BIOMATERIALS, BIOMATERIALS, Bd. 12, Nr. 1, 1. Januar 1991, Seiten Bd. 12, Nr. 1, 1. Januar 1991, Seiten 71-75, XP000173484 71-75, XP000173484 in der Anmeldung erwähnt in der Anmeldung erwähnt
- VALLANCE D W ET AL: "APPLICATION OF THE VALLANCE D W ET AL: "APPLICATION OF THE BENDING-UNDER-TENSION FRICTION TEST TO BENDING-UNDER-TENSION FRICTION TEST TO COATED SHEET STEELS" COATED SHEET STEELS" JOURNAL OF HEAT TREATING, JOURNAL OF HEAT TREATING, Bd. 1, Nr. 5, 1. Oktober 1992, Seiten Bd. 1, Nr. 5, 1. Oktober 1992, Seiten 685-693, XP000336773 685-693, XP000336773
- FRICKE J ET AL: "MESSUNGEN AN FRICKE J ET AL: "MESSUNGEN AN GESCHMIERTEN GLEITFLAECHEN" GESCHMIERTEN GLEITFLAECHEN" MESSEN + PRUFEN, MESSEN + PRUFEN, Bd. 15, Nr. 2, Seiten 148-155, Bd. 15, Nr. 2, Seiten 148-155, XP002045932 XP002045932 in der Anmeldung erwähnt in der Anmeldung erwähnt
- FRICKE J ET AL: "MESSUNGEN AN GESCHMIERTEN FRICKE J ET AL: "MESSUNGEN AN GESCHMIERTEN GLEITFLAECHEN" MESSEN + PRUEFEN, Bd. 15, GLEITFLAECHEN" MESSEN + PRUEFEN, Bd. 15, Nr. 2, Seiten 148-155, XP002045932 in der Nr. 2, Seiten 148-155, XP002045932 in der Anmeldung erwähnt Anmeldung erwähnt

## Beschreibung

Die vorliegende Erfindung betrifft ein Verfahren und eine Vorrichtung zur Bestimmung des Oberflächen-Reibungskoeffizienten von Körpern, insbesondere Kathetern.

Medizinische Katheter werden unterschiedlichen Oberflächenbehandlungen unterworfen, die u.a. die Oberflächenreibung des Katheters gegenüber dem umliegenden Gewebe herabsetzen sollen. Damit soll ein leichteres und schmerzfreieres Einführen des Katheters, beispielsweise in die Blutbahn bei Herzkathetern oder die Harnröhre bei Blasenkathetern, ermöglicht und einer möglichen Gewebeschädigung vorgebeugt werden.

Katheter bestehen häufig aus unterschiedlichen, weichen Polymermaterialien, wie beispielsweise Silikonkautschuk oder Polyurethan, die teilweise noch verschiedenen Oberflächenbehandlungen unterzogen wurden. Diese Oberflächenbehandlung dient der Glättung und Hydrophilisierung mit dem Ziel, die Oberflächenreibung zu vermindern, sowie das Anheften von Eiweißen (Bakterien) zu reduzieren. Eine starke Hydrophilisierung von Oberflächen verringert deren gegenseitige Wechselwirkungsenergie in wäßrigen Lösungen und damit die Adhäsionskomponente der Reibungskraft.

Als besonders reibungsarm haben sich Beschichtungen aus verschiedenen Hydrogelen erwiesen, die sich nach dem Einweichen in Wasser sehr schlüpfrig anfühlen. Bisher gibt es jedoch noch keine standardisierte Methode, diese "Schlüpfrigkeit" in Form eines Oberflächenreibungskoeffizienten zu quantifizieren, so daß eine aussagekräftige quantitative Beurteilung der Reibungsminderung durch eine bestimmte Methode der Oberflächenbehandlung derzeit nicht möglich ist.

Im Stand der Technik sind bereits verschiedene Meßansätze zur Bestimmung von Oberflächen-Reibungskoeffizienten von Kathetern bekannt. Die mit diesen bekannten Methoden ermittelten Meßergebnisse sind jedoch nicht nur abhängig von der Oberflächenreibung, sondern auch von der Geometrie und der Konsistenz des jeweils vermessenen Katheters, und somit nicht miteinander vergleichbar.

So wurden beispielsweise für Blasenkatheter bereits mehrfach in vivo Feldtests zur Bestimmung der Oberflächenreibung in der Urethra von Kaninchen sowie auch von Menschen durchgeführt (siehe Nickel J.C. et al., "In Vivo Coefficient of Kinetic Friction: Study of Urinary Catheter Biocompatibility", Urology XXIX (5) 501-503 (1987); Khoury A.E. et al., "Determination of the Coefficient of Kinetic Friction of Urinary Catheter Materials", The Journal of Urology 145, 610-612 (1991); Tomita N. et al., "Biomaterials Lubricated for Minimum Frictional Resistance", Journal of Applied Biomaterials 5, 175-181 (1994)).

Diese Tests sind sehr realitätsnah, eignen sich jedoch nicht als Standardtestmethode für Katheterbeschichtungen, da biologische Testindividuen sich insbesondere im Muskeltonus der Urethra unterscheiden, so daß sich keine definierte Flächenpressung auf die Katheteroberfläche aufbringen läßt. Infolgedessen sind auch die für einen bestimmten Katheter gemessenen Reibungskoeffizienten für verschiedene Individuen sehr unterschiedlich.

Verschiedene Ansätze sind auch für Labortestsysteme bekannt. In zwei Literaturstellen wird ein Testsystem beschrieben, bei dem zwei durchtrennte Abschnitte des zu testenden Katheters auf einer Glasplatte befestigt und anschließend mit einem ebenen, entweder mit Collagen-Gel oder Hydrogel beschichteten Klotz definierten Gewichts belastet werden. Ein Reibungskoeffizient wird durch Messung der Kraft bestimmt, die benötigt wird, um den Klotz über die Katheter zu ziehen (siehe Graiver D. et al., "Surface Morphology and Friction Coefficient of Various Types of Foley Catheters", Biomaterials 14(6), 465-469 (1993)) oder durch Messung des minimalen Schrägstellungswinkels der Glasplatte, der zur Erzeugung einer Gleitbewegung des Klotzes erforderlich ist (siehe Nagaoka S. et al., "Low-friction Hydrophilic Surface for Medical Devices", Biomaterials 11, 419-424 (1990)). Bei diesen Prüfsystemen liegt im Gegensatz zum realen System eine kontraforme Wirkflächenpaarung, d.h. kein vollständiger flächiger Kontakt zwischen Katheter und Klotz, vor. Darüber hinaus lassen sich die Flächenpressungen nicht festlegen, da die Kontaktfläche bei gleichbleibendem Auflagegewicht je nach Weichheit und Geometrie des getesteten Katheters variiert. Ein genormter Reibungskoeffizient ist damit nicht bestimmbar.

Bei zwei weiteren Methoden (vgl. Uyama Y. et al., "Lowfrictional Catheter Materials by Photo-induced Graft Polymerization", Biomaterials 12, 71-75 (1991)) wird der Katheter durch ein gebogenes PVC-Rohr gezogen und die dafür erforderliche Kraft gemessen, oder eine mit einem definierten Gewicht belastete Scheibe aus Silikonkautschuk über den Katheter gezogen.

In beiden Fällen liegt eine weitgehend konforme Wirkflächenpaarung vor, d.h. die Flächen des Katheters und des PVC-Rohres bzw. der Scheibe aus Silikonkautschuk sind in flächigem Kontakt zueinander. Im ersten Fall läßt sich jedoch die Normalkraft auf den Katheter nicht festlegen, und auch die Größe der Kontaktfläche variiert, da sich der Katheter beim Durchziehen durch das starre Rohr deformiert. Im zweiten Fall variiert die Normalkraft über die Kontaktfläche, und auch die Kontaktfläche selbst und damit die Flächenpressung kann für verschiedene Kathetergrößen nicht exakt festgelegt werden. Bei beiden Methoden wurde für den Gegenkörper zudem ein ungeeignetes Material gewählt, da weder PVC noch Silikonkautschuk hydrophil sind. Somit besteht keine Ähnlichkeit zu den realen Verhältnissen bei Anwendung des Katheters am menschlichen oder tierischen Körper.

Ein weiterer Ansatz zur Bestimmung des Oberflächen-Reibungskoeffizienten ist aus Marmieri G. et al., "Evaluation of Slipperiness of Catheter Surfaces", Journal of Biomedical Materials Research (Applied Biomaterials) 33, 29-33 (1996) bekannt. Bei der dort vorgestellten Testmethode wird der Katheter durch einen Block ausgehärteten Agars gezogen. Die Zeit, die erforderlich ist, um ein Katheterstück mittels einer definierten Gewichtsbelastung aus dem Agar herauszuziehen, wird als Maß für die Schlüpfrigkeit des Katheters angesetzt.

Mit diesem Testaufbau läßt sich jedoch keine definierte Flächenpressung auf den Katheter vorgeben, so daß dies keine normbare Testmethode darstellt.

Keine der aus dem Stand der Technik bekannten Verfahren oder Vorrichtungen ermöglichen somit eine standardisierte Bestimmung des Oberflächen-Reibungskoeffizienten von Kathetern. Die bekannten Verfahren liefern vielmehr Meßergebnisse, die nicht nur abhängig sind von der Oberflächenreibung, sondern auch von der Geometrie und Konsistenz des jeweils vermessenen Katheters.

Es ist daher die Aufgabe der vorliegenden Erfindung, ein standardisierbares Verfahren und eine Vorrichtung zur Bestimmung des Oberflächen-Reibungskoeffizienten von Körpern, insbesondere Kathetern bereitzustellen, deren Meßergebnisse reproduzierbar lediglich von der Oberflächenreibung abhängen und unabhängig sind von der Geometrie und der Konsistenz des Körpermaterials selbst.

Die Aufgabe wird mit dem Verfahren und der Vorrichtung nach den Ansprüchen 1 und 9 gelöst. Vorteilhafte Ausgestaltungen sind Gegenstand der Unteransprüche.

Bei dem erfindungsgemäßen Verfahren wird der zu untersuchende Körper, beispielsweise ein Katheter, mit definierter Geschwindigkeit durch eine gelartig weiche, viskoelastische Substanz gezogen, und die dazu erforderliche Reibungskraft wird gemessen. Die viskoelastische Substanz wird hierbei mit einem definierten Druck beaufschlagt, der sich aufgrund der viskosen Materialeigenschaften in der gesamten Substanz ausbreitet. Da der Katheter über eine bestimmte Länge 1 (Wechselwirkungslänge) von der Substanz umschlossen wird, wirkt dieser Druck insbesondere auch auf die Oberfläche des Katheters ein. Die Katheteroberfläche wird somit mit einer definierten Flächennormalkraft beaufschlagt. Die belastete Gesamtfläche des Katheters ergibt sich hierbei zu A = l * π * d, wobei d der Durchmesser des Katheters ist.

Bei Vermessung von Kathetern mit unterschiedlichen Durchmessern d läßt sich mit dem erfindungsgemäßen Verfahren die Gesamtfläche A dadurch konstanthalten, daß man die Wechselwirkungslänge 1, auf der der Katheter mit der viskoelastischen Substanz in Kontakt kommt, umgekehrt proportional zum Katheterdurchmesser anpaßt: 1 = A /(π * d). Dies läßt sich dadurch erreichen, daß die Abmessungen der viskoelastischen Substanz und die Abmessungen des diese Substanz aufnehmenden Behälters speziell für jeden Katheterdurchmesser angepaßt werden.

Durch Messung der zum Durchziehen des Katheters durch die viskoelastische Substanz erforderlichen Kraft läßt sich bei der vorgegebenen und bekannten Normalkraft der Oberflächen-Reibungskoeffizient des Katheters ermitteln.

Selbstverständlich ist es alternativ auch möglich, die viskoelastische Substanz relativ zu einem ortsfesten Katheter mit definierter Geschwindigkeit zu bewegen.

Durch die Beaufschlagung der Substanz mit einem vorgebbaren, definierten Druck sind die Flächenpressungen auf jedes Flächenelement der Katheteroberfläche genau vorgebbar und können konstantgehalten werden. Durch Konstanthalten der mit Druck beaufschlagten Fläche läßt sich damit für jeden Katheterdurchmesser und für jede Katheterkonsistenz auch die insgesamt einwirkende Normalkraft konstanthalten. Es kann also für jede Kathetergeometrie und -konsistenz eine definierte Normalkraft auf einen definierten Bereich der Katheteroberfläche ausgeübt und die Reibungskraft gemessen werden. Aus dem Verhältnis zwischen gemessener Reibungskraft und vorgegebener Normalkraft ergibt sich dann der Reibungskoeffizient. Die Bestimmung dieses Reibungskoeffizienten ist reproduzierbar und hängt lediglich von der Oberflächenreibung ab. Somit ist mit dem erfindungsgemäßen Verfahren und der zugehörigen Vorrichtung eine quantitative Beurteilung der Reibungsminderung durch unterschiedliche Methoden der Oberflächenbehandlungen von Kathetern möglich.

Die Beaufschlagung der Substanz mit einem vorgebbaren, definierten Druck wird vorzugsweise dadurch realisiert, daß eine freie Oberfläche der Substanz mit einem definierten Flächendruck beaufschlagt wird. So läßt sich beispielsweise ein Flächendruck von ca. 10⁴ Pa mit Hilfe einer Wassersäule oder durch Einpumpen von Luft oder Wasser in den Behälter mit der Substanz auf die freie Oberfläche aufbringen.

Für eine aussagekräftige Methode zur Bestimmung des Oberflächen-Reibungskoeffizienten von Kathetern sollten die vorgegebenen Meßbedingungen möglichst realitätsnah gewählt werden. Es erscheint daher sinnvoll, als Umgebungsmedium für die Messung eine physiologische Kochsalzlösung mit einer Temperatur von 37°C zu wählen.

Die viskoelastische Substanz sollte ähnlich biologischem Gewebe möglichst hydrophil und in ihren mechanischen und chemischen Eigenschaften reproduzierbar und zeitlich stabil herstellbar sein. Hydrophile, gelartige Kunststoffe, sogenannte Hydrogele, sind daher als viskoelastische Materialien für diesen Zweck eher geeignet als Gele natürlichen Ursprungs.

Im folgenden wird die Erfindung anhand von Ausführungsbeispielen in Verbindung mit den Zeichnungen näher erläutert. Hierbei zeigen:
- Fig. 1: schematisch das Meßprinzip der vorliegenden Erfindung;
- Fig. 2: schematisch ein Ausführungsbeispiel einer Vorrichtung der vorliegenden Erfindung;
- Fig. 3: schematisch ein weiteres Ausführungsbeispiel einer Vorrichtung der vorliegenden Erfindung;
- Fig. 4a: ein Beispiel für ein Behältnis gemäß der erfindungsgemäßen Vorrichtung; und
- Fig. 4b: ein Beispiel einer Anordnung für die Befüllung des Behältnisses gemäß Fig. 4a mit einer viskoelastischen Substanz.

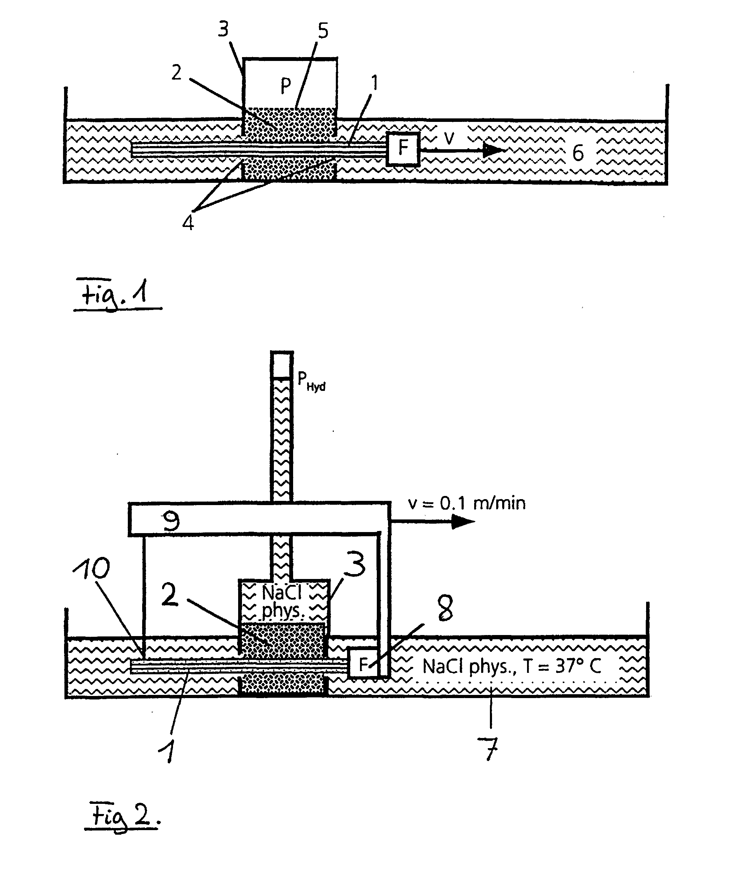

In Fig. 1 ist nochmals das Lösungsprinzip des vorliegenden Verfahrens anhand eines Ausführungsbeispiels dargestellt. Ein zu untersuchender Katheter (1) wird mit definierter Geschwindigkeit v durch eine gelartig weiche, viskoelastische Substanz (2) gezogen, und die dazu erforderliche Reibungskraft F wird gemessen. Die Substanz (2) füllt das Innere eines starren Behälters (3) derart aus, daß sie sich an den Behälterwänden und am Behälterboden flächig anschmiegt. Sie weist zum Durchführen des Katheters in der Mitte ein zylinderförmiges, durchgängiges Lumen auf, dessen Durchmesser weitestgehend dem Katheterdurchmesser entspricht. Auch die Behälterwand weist an den beiden Durchtrittsstellen des Katheters Bohrungen (4) auf, deren Durchmesser geringfügig größer ist als der Katheterdurchmesser, so daß der Katheter beim Durchziehen durch die Substanz nicht an der Behälterwand reibt. Auf die freie Oberfläche (5) der viskoelastischen Substanz wird ein definierter Flächendruck P aufgebracht, der sich aufgrund der viskosen Materialeigenschaften nach einer kurzen Relaxationszeit in der gesamten Substanz ausbreitet. Da sich die Wand des in der Substanz vorhandenen durchgängigen Lumens aufgrund der viskoelastischen Eigenschaften eng an die Katheterwand anschmiegt, wirkt dieser Druck insbesondere auch auf die Oberfläche des Katheters ein. Die Katheteroberfläche wird somit mit einer durch den Flächendruck P definierten Flächennormalkraft beaufschlagt.

Die gesamte Messung kann in einer Wanne mit einem Umgebungsmedium (6) durchgeführt werden, das aus einer physiologischen Kochsalzlösung von 37°C vergleichbar den realen Verhältnissen in einem menschlichen Körper besteht. Die Flächenpressungen für Blasenkatheter betragen beispielsweise ungefähr zwischen 4*10² und 8*10³ Pa (zwischen 4 cm H₂O und 80 cm H₂O). Für die Relativbewegung zwischen dem Katheter und der viskoelastischen Substanz kann beispielsweise eine konstante Geschwindigkeit v von 10 cm pro Minute gewählt werden. Es versteht sich jedoch von selbst, daß die angegebenen Werte lediglich Beispiele darstellen, so daß je nach Anforderungen auch andere Geschwindigkeiten und ein anderer Flächendruck zum Einsatz kommen können.

Als Material für die viskoelastische Substanz werden bei der Vermessung von Kathetern vorzugsweise Hydrogele eingesetzt. Hierbei sind Hydrogele von Vorteil, die Phosphorylcholin enthalten, ein Molekül, das auch in Biomembranen vorhanden ist. Weiterhin zeigt ein Hydrogelmaterial (Hypol PreMA G 60 von der Firma Hampshire) Vorteile, da es leicht zu verarbeiten ist. Dabei handelt es sich um ein Polyurethan-Hydrogel-Prepolymer, das nach Mischung mit Wasser in wenigen Sekunden zu einem Polymer vernetzt. Hierbei entsteht ein festes, hydrophiles Schaumgummi. Es läßt sich auch ein klares, hydrophiles Gel herstellen, indem das Prepolymer vor dem Anrühren mit Wasser mit einem großen Anteil Aceton vermischt wird. Die Vernetzungszeit erhöht sich dann auf ca. eine halbe Stunde, so daß das Material in dieser Zeit leicht in Formen gegossen werden kann. Nach dem Vernetzen hat das Material dann eine feste, gelartige Konsistenz mit einer abriebfesten, gut benetzenden Oberfläche. Nach dem Einlegen in destilliertes Wasser löst es sich leicht von Glasoberflächen, so daß damit eine glatte Oberfläche gegossen werden kann. Insbesondere zeigte sich, daß ein Mischungsverhältnis von einem Gewichtsanteil Prepolymer zu acht Teilen Aceton und zwei Teilen destilliertem Wasser zu einer Gelkonsistenz führt, die der Konsistenz von festem Muskelgewebe sehr ähnlich ist.

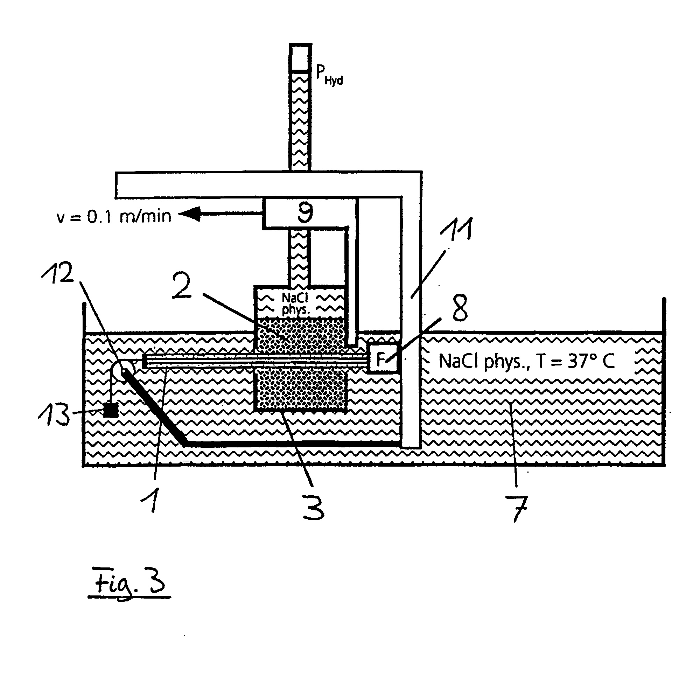

Fig. 2 zeigt eine Anordnung gemäß einem Ausführungsbeispiel der vorliegenden Erfindung. Hierbei wird die Relativbewegung zwischen einem Katheter (1) und dem Reibungskörper in Form eines Hydrogels (2) erreicht, indem der Reibungskörper unbeweglich in seiner Position fixiert und der Katheter (1) mit Hilfe eines mit definierter Geschwindigkeit v verfahrbaren Schlittens (9) durch das Gellumen gezogen wird. Die dazu erforderliche Zugkraft, die nach Subtraktion des durch die Kathetereinspannung (10) bedingten Offset der Oberflächenreibungskraft entspricht, wird mit Hilfe eines am Katheterende fixierten Kraftsensors (8) gemessen. In einem weiteren Ausführungsbeispiel, das in Fig. 3 gezeigt ist, wird der Katheter (1) in einem festen Rahmen (11) fest eingespannt, so daß er in seiner Position fixiert bleibt. Der Behälter (3) mit dem Hydrogel (2) wird dann mit Hilfe eines mit definierter Geschwindigkeit v verfahrbaren Schlittens (9) über den Katheter (1) gezogen. Auch hier entspricht die mittels des an einem Katheterende angebrachten Kraftsensors (8) gemessene Kraft der Oberflächenreibung, wenn man die Einspannkraft, die über die Umlenkrolle (12) durch das Gewicht (13) konstantgehalten wird, subtrahiert.

In den beiden in Fig. 2 und 3 gezeigten Fällen kann die Flächenpressung beispielsweise durch den hydrostatischen Druck einer Wassersäule (hier: physiologische Kochsalzlösung) definiert vorgegeben werden. Als Behälter für die Wassersäule dient beispielsweise eine Glasbürette, die in entsprechender Höhe (gut 1 m über dem Katheter) an einer Meterskala aufgehängt ist. Das untere Ende der Bürette ist über eine flexible Schlauchverbindung mit dem Hydrogelbehälter verbunden.

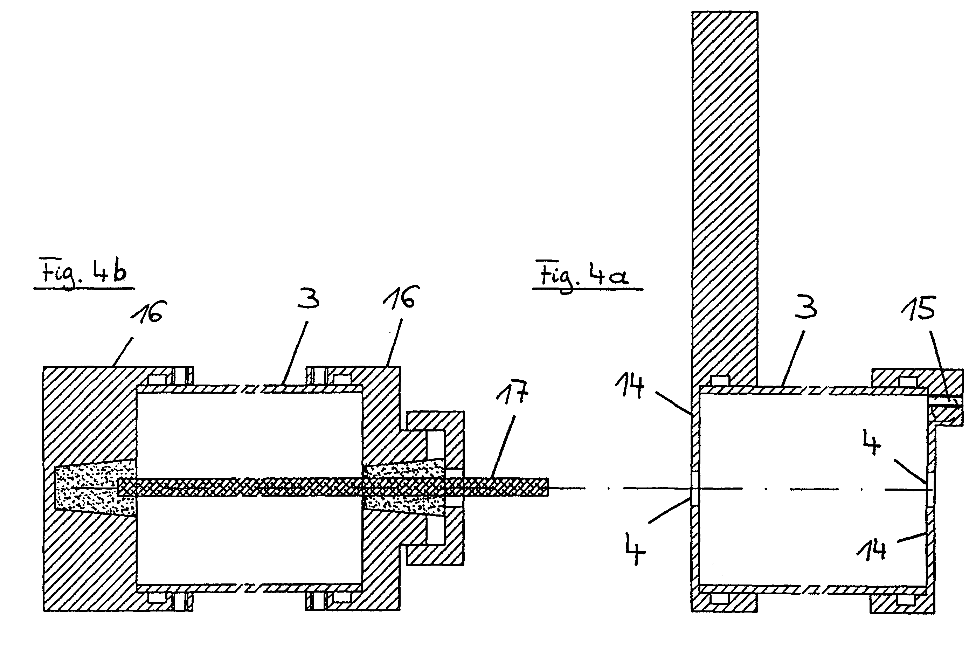

Als Behälter (3) für das Hydrogel (als viskoelastische Substanz) kann ein in axialer Richtung waagrecht positioniertes Rohrstück dienen, das an beiden Enden durch einen dichtenden Deckel (14) mit jeweils einer zentralen Öffnung (4) für den Katheterdurchtritt verschlossen ist. Ein Beispiel für einen derartigen Behälter ist in Fig. 4a gezeigt. Die für die jeweilige Katheter-Abmessung passende Behälterlänge kann dann einfach durch Einsetzen eines auf die erforderliche Länge gekürzten und mit Hydrogel gefüllten Rohres erzielt werden. Einer der Deckel wird zusätzlich mit einer Öffnung (15) versehen, durch die das Behälterinnere mit Druck beaufschlagt werden kann.

Als Vorbereitung für die Messung wird das Rohr zum Befüllen mit Hydrogel zunächst durch beidendigen Aufsatz geeigneter Deckel (16) in eine Gußform verwandelt, wie in Abbildung 4b bezeigt. Zur Herstellung des erforderlichen Lumens in der Hydrogelmasse wird zunächst ein Edelstahloder Glasstab (17) im Hydrogel (nicht gezeigt) eingegossen. Der Durchmesser des Edelstahl- oder Glasstabs (17) entspricht weitgehend dem Durchmesser des zu prüfenden Katheters. Nach dem Ausvulkanisieren des Hydrogels wird der Stab entfernt und es verbleibt im Gel eine entsprechend dimensionierte Aussparung.

Bei einer Länge des Hydrogelbehälters (3) von beispielsweise 150 mm für einen Katheterdurchmesser von 2 mm ergibt sich eine Kontaktfläche von 942 mm², wodurch bei einem hydrostatischen Druck von beispielsweise 10⁴ Pa (ca. 1 m Wassersäule) eine Gesamtnormalkraft von 9,42 N auf die Katheteroberfläche einwirkt. Geht man von einem Oberflächenreibungskoeffizienten des Katheters in der Größenordnung von µ = 0,1 aus, so wird man mit der beschriebenen Meßeinrichtung eine Reibungskraft von etwa 1 N messen. Für größere Katheterdurchmesser benötigt man, um die Kontaktfläche konstant zu halten, entsprechend kürzere Hydrogelbehälter. Beispielsweise wird für einen Katheter von 5 mm Durchmesser ein Behälter von 60 mm Länge eingesetzt.

Mit dem erfindungsgemäßen Verfahren und der zugehörigen Vorrichtung lassen sich somit Katheter unterschiedlicher Durchmesser mit jeweils dem gleichen Flächendruck beaufschlagen, so daß ein direkter Vergleich der ermittelten Oberflächen-Reibungskoeffizienten unabhängig von der Geometrie und Konsistenz des jeweils vermessenen Katheters möglich ist.
Das erfindungsgemäße Verfahren und die Vorrichtung sind selbstverständlich auch zur Bestimmung der Oberflächenreibung von anderen Körpern als Kathetern geeignet. Der bevorzugte Anwendungsfall betrifft Körper, die mit biologischem Gewebe in Kontakt kommen, d.h. beispielsweise in Blutbahnen, Harnröhren o.ä. eingeführt werden.

## Patentansprüche

1. Verfahren zur Bestimmung des Oberflächen-Reibungskoeffizienten von Körpern, bei dem der Körper (1) über eine Wechselwirkungslänge 1 von einer gelartigen, viskoelastischen Substanz (2) umschlossen, zwischen dem Körper und der Substanz eine Relativbewegung mit konstanter Geschwindigkeit erzeugt und die dafür erforderliche Kraft gemessen wird,
**dadurch gekennzeichnet,**
**daß** die Substanz (2) zumindest während der Relativbewegung mit einem vorgebbaren, definierten Druck beaufschlagt und die Wechselwirkungslänge 1 so gewählt wird, daß über die Substanz auf eine durch die Wechselwirkungslänge 1 vorgebbare Fläche des Körpers (1) eine definierte Flächennormalkraft wirkt, und daß der Oberflächen-Reibungskoeffizient aus dem Verhältnis von gemessener Kraft zu Flächennormalkraft bestimmt wird.

2. Verfahren nach Anspruch 1, **dadurch gekennzeichnet, daß** die Substanz (2) eine freie Oberfläche (5) aufweist, die zur Erzeugung des definierten Druckes mit einem definierten, vorgebbaren Flächendruck beaufschlagt wird.

3. Verfahren nach Anspruch 1 oder 2, **dadurch gekennzeichnet, daß** der Körper ein Katheter ist.

4. Verfahren nach Anspruch 3, **dadurch gekennzeichnet, daß** bei Kathetern mit unterschiedlichen Durchmessern dᵢ für jeden Katheter die Wechselwirkungslänge lᵢ so gewählt ist, daß bei jedem Katheter die gleiche konstante Fläche A=lᵢ*π*dᵢ mit Druck beaufschlagt wird.

5. Verfahren nach einem der Ansprüche 1 bis 4, **dadurch gekennzeichnet, daß** der Körper durch die Substanz gezogen wird.

6. Verfahren nach einem der Ansprüche 1 bis 4, **dadurch gekennzeichnet, daß** die Substanz über den Körper gezogen wird.

7. Verfahren nach einem der Ansprüche 2 bis 6, **dadurch gekennzeichnet, daß** die freie Oberfläche der Substanz über einen Gas- oder Wasserdruck mit Druck beaufschlagt wird.

8. Verfahren nach einem der Ansprüche 1 bis 7, **dadurch gekennzeichnet, daß** die Substanz ein Hydrogel ist.

9. Vorrichtung zur Durchführung des Verfahrens nach Anspruch 1,
bestehend aus einem Behältnis (3) mit einer gelartigen, viskoelastischen Substanz (2), das eine Ein- und eine Auslaßöffnung (4) aufweist, die ein Durchziehen des Körpers durch die Substanz ermöglichen, und mit einer weiteren Öffnung (15) zur Beaufschlagung der Substanz mit einem definierten Druck.

10. Vorrichtung nach Anspruch 9, **dadurch gekennzeichnet, daß** weiterhin ein Schlitten (9) zur Befestigung des Körpers (1) vorgesehen ist, mit dem der Körper relativ zum Behältnis (3) mit konstanter Geschwindigkeit bewegt werden kann.

11. Vorrichtung nach Anspruch 9, **dadurch gekennzeichnet, daß** weiterhin ein Schlitten (9) zur Befestigung des Behältnisses (3) vorgesehen ist, mit dem das Behältnis relativ zum Körper (1) mit konstanter Geschwindigkeit bewegt werden kann.

## Claims

1. A process for determining the surface friction coefficients of bodies, in which the body (1) is enclosed in a gel-like viscoelastic substance (2) over a reciprocal action length 1, between said body and said substance a relative movement with constant velocity is generated and the force required therefore is measured,
**characterized by**
a presettable, defined pressure being applied to said substance (2) at least during said relative movement and said reciprocal action length 1 being selected in such a manner that a defined surface normal force acts via said substance on an area of said body (1) preselectable by said reciprocal action length 1, and said surface friction coefficient being determined from the ratio of the measured force to the surface normal force.

2. A process according to claim 1, **characterized by**
said substance (2) having a free surface (5) to which a defined, given surface pressure is applied to generate said defined pressure.

3. A process according to claim 1 or 2, **characterized by** said body being a catheter.

4. A process according to claim 3, **characterized in that** with catheters of different diameters dᵢ, said reciprocal action length lᵢ is selected for each said catheter in such a manner that on each said catheter pressure is applied to the same constant area A=lᵢ*π*dᵢ.

5. A process according to one of the claims 1 to 4,
**characterized by** said body being pulled through said substance.

6. A process according to one of the claims 1 to 4,
**characterized by** said substance being pulled over said body.

7. A process according to one of the claims 2 to 6,
**characterized by** pressure being applied to said free surface of said substance via gas or water pressure.

8. A process according to one of the claims 1 to 7,
**characterized by** said substance being a hydrogel.

9. A device for carrying out the process according to claim 1,
comprising a container (3) with a gel-like, viscoelastic substance (2), said container having an inlet and an outlet opening (4) which permit pulling said body through said substance and having another opening (15) for applying a defined pressure to said substance.

10. A device according to claim 9, **characterized by**, in addition, a slide (9) being provided for attaching said body (1), with which said body can be moved relative to said container (3) with constant velocity.

11. A device according to claim 9, **characterized by**, in addition, a slide (9) being provided for attaching said container (3) with which said container can be moved relative to said body (1) with constant velocity.

## Revendications

1. Procédé à déterminer le coefficient du frottement superficiel des corps, dans lequel ledit corps (1) est entouré par une substance viscoélastique similaire à un gel sur une longueur d'interaction I, crée un mouvement relatif à vitesse constante entre ledit corps et ladite substance, à la force requise à cette fin étant mesurée,
**caractérisé en ce**
**que** ladite substance (2) est soumise à une pression définie prédéterminable, au moins au cours dudit mouvement relatif, et en ce que ladite longueur d'interaction I est choisie de façon qu'une force normale en plan définie agit via le par ladite longueur d'interaction I, et en ce que le coefficient de frottement superficiel est déterminé par dérivation du rapport entre la force mesurée et la force normale en plan.

2. Procédé selon la revendication 1,
**caractérisé en ce**
**que** ladite substance (2) présente une surface libre (5), qui est soumise à une pression superficielle définie prédéterminable pour l'établissement de ladite pression définie.

3. Procédé selon la revendication 1 ou 2,
**caractérisé en ce**
**que** ledit corps est un cathéter.

4. Procédé selon la revendication 3,
**caractérisé en ce**
**qu'**au cas de cathéters aux diamètres différents dᵢ, ladite longueur d'interaction Iᵢ est choisie pour chaque cathéter de façon, que la même aire constante A=Iᵢ*π*dᵢ dans chaque cathéter est soumise à une pression.

5. Procédé selon une quelconque des revendications 1 à 4,
**caractérisé en ce**
**que** ledit corps est passé à travers ladite substance.

6. Procédé selon une quelconque des revendications 1 à 4,
**caractérisé en ce**
**que** ladite substance est passé sur ledit corps.

7. Procédé selon une quelconque des revendications 2 à 6,
**caractérisé en ce**
**que** la surface libre de ladite substance est soumise à une pression via une pression de gaz ou de l'eau.

8. Procédé selon une quelconque des revendications 1 à 7,
**caractérisé en ce**
**que** ladite substance est un hydrogel.

9. Dispositif à réaliser le procédé selon la revendication 1,
**caractérisé** en ce
constitué par un réservoir (3) à une substance (2) viscoélastique similaire à un gel, qui présente une ouverture d'admission et une ouverture de sortie (4), qui permettent un passage dudit corps à travers ladite substance, ainsi qu'une autre ouverture (15) à soumettre ladite substance à une pression définie.

10. Dispositif selon la revendication 9,
**caractérisé en ce**
**qu'**au plus un chariot (9) est disposé pour l'attache dudit corps (1), moyennant lequel on peut déplacer ledit corps relativement audit réservoir (3) à une vitesse constante.

11. Dispositif selon la revendication 9,
**caractérisé en ce**
**qu'**au plus un chariot (9) est disposé pour l'attache dudit réservoir (3), moyennant lequel on peut déplacer ledit réservoir relativement audit corps (1) à une vitesse constante.
